# EUROPEAN PATENT SPECIFICATION

(11) **EP 2 792 858 B1**
(45) Date of publication and mention of the grant of the patent: **10.05.2017**
(21) Application number: 13192867.3
(22) Date of filing: 14.11.2013
(51) Int. Cl.: F01K 13/02, F01D 19/02, F22B 35/00, F01K 7/16

(54) **Steam turbine power plant**
Dampfturbinenkraftwerk
Centrale électrique à turbine à vapeur

(30) Priority: 15.03.2013 JP 2013054056
(43) Date of publication of application: 22.10.2014
(73) Proprietor: Mitsubishi Hitachi Power Systems, Ltd., Yokohama 220-8401 (JP)
(72) Inventor: Yoshida, Yasuhiro, Tokyo, 100-8280 (JP); Yoshida, Takuya, Tokyo, 100-8280 (JP); Yashiki, Tatsuro, Tokyo, 100-8280 (JP); Kusumi, Naohiro, Tokyo, 100-8280 (JP); Nomura, Kenichiro, Tokyo, 100-8280 (JP); Yamanaka, Kazunori, Tokyo, 100-8280 (JP); Tomizawa, Masaaki, Tokyo, 100-8280 (JP); Takahashi, Yuichi, Tokyo, 100-8280 (JP); Suzuki, Fumiyuki, Tokyo, 100-8280 (JP)
(74) Representative: MERH-IP Matias Erny Reichl Hoffmann Patentanwälte PartG mbB

(56) References cited:
- WO-A1-2009/096028
- JP-A- H1 136 818
- US-A- 3 782 113
- US-A- 4 558 227
- US-A- 4 888 953
- US-A1- 2011 071 692

## Description

### BACKGROUND OF THE INVENTION

### 1. Field of the Invention

The present invention relates to steam turbine power plants.

### 2. Description of the Related Art

It is being demanded that a starting time of a steam turbine power plant be further reduced for suppressed instability of the electric power in a grid-connected power system by connecting renewable energy, represented by wind power generation or solar power generation, to the power system. When the steam turbine is started up, however, steam abruptly increases in both temperature and flow rate. A consequential sudden increase in a surface temperature of the turbine rotor relative to an internal temperature thereof augments a radial temperature gradient and thus increases a thermal stress. An excessive thermal stress could shorten a life of the turbine rotor. In addition, if the change in the temperature of the steam is significant, differential thermal expansion due to a difference in heat capacity occurs between the rotor and casing of the turbine. If the differential thermal expansion increases, this could lead to contact between the rotating turbine rotor and the stationary casing, and hence to damage to both thereof. Accordingly, a starting state of the steam turbine needs to be controlled to prevent the thermal stress of the turbine rotor and the differential thermal expansion thereof with respect to that of the casing from exceeding respective maximum permissible levels (refer to Japanese Patent No. 4723884, shown as Patent Document 1 below, and JP-2009-281248-A, shown as Patent Document 2 below). US 4 888 953 A describes a boiler/turbine plant controlling apparatus that comprises a circuit for driving a turbine inlet steam flow regulator valve on the basis of a difference between a load command signal adjusted by a thermal stress value of a turbine and an actually measured output signal of a plant.

### SUMMARY OF THE INVENTION

In Patent Documents 1, 2, however, the flow rate of the steam supplied to the steam turbine is controlled by a control valve to regulate the thermal stress and the differential thermal expansion, so the thermal stress and the differential thermal expansion are only regulated in a range that the control valve can control the flow rate of the steam. Another problem exists with energy efficiency since surplus steam is given away via a bypass valve for reduced supply of the steam to the steam turbine.

The present invention has been made with the above in view, and an object of the invention is to provide a steam turbine power plant adapted to start operating very efficiently in an extended control range of its startup constraints such as a thermal stress.

The object is achieved by the invention according to claim 1. The dependent claims describe further preferred
developments. In order to attain the above object, the present invention includes heat source equipment that heats a low-temperature flow by applying a heat medium to generate a high-temperature flow, a steam generator that generates steam using the high-temperature flow generated by the heat source equipment, a steam turbine driven by the steam generated by the steam generator, an electric generator that converts rotational motive power of the steam turbine into electric power, a heat medium controller that controls a supply rate of the heat medium supplied to the heat source equipment, a low-temperature flow controller that controls a supply rate of the low-temperature flow supplied to the heat source equipment, a prediction device that predicts startup constraints during a previously set prediction time period after a set time from the current time of the steam turbine from control input variables of the heat medium controller and the low-temperature flow controller when the steam turbine is started, and /or a control input variables setter that controls the heat medium controller and the low-temperature flow controller so as to prevent data predictions by the prediction device from exceeding limit values of the startup constraints.

In accordance with the present invention, a steam turbine power plant starts operating very efficiently in an extended control range of thermal stresses and other startup constraints.

### BRIEF DESCRIPTION OF THE DRAWINGS

Fig. 1 is a schematic block diagram of a steam turbine power plant according to a first embodiment of the present invention;
Fig. 2 is a flowchart that represents a starting control sequence relating to the steam turbine power plant according to the first embodiment of the present invention;
Fig. 3 is a supplemental explanatory diagram of the starting control sequence relating to the steam turbine power plant;
Fig. 4 is a flowchart that shows details of step S104 in the sequence of Fig. 2;
Fig. 5 is a schematic block diagram of a steam turbine power plant according to a second embodiment of the present invention;
Fig. 6 is a schematic block diagram of a steam turbine power plant according to a third embodiment of the present invention;
Fig. 7 is a diagram showing an example of an operating pattern for heat source equipment; and
Fig. 8 is an explanatory diagram of a method for controlling heat source equipment of the steam turbine power plant according to the first embodiment of the present invention.

### DESCRIPTION OF PREFERRED EMBODIMENTS

Hereunder, embodiments of the present invention will be described using the accompanying drawings.

### First Embodiment

### 1. Steam turbine power plant

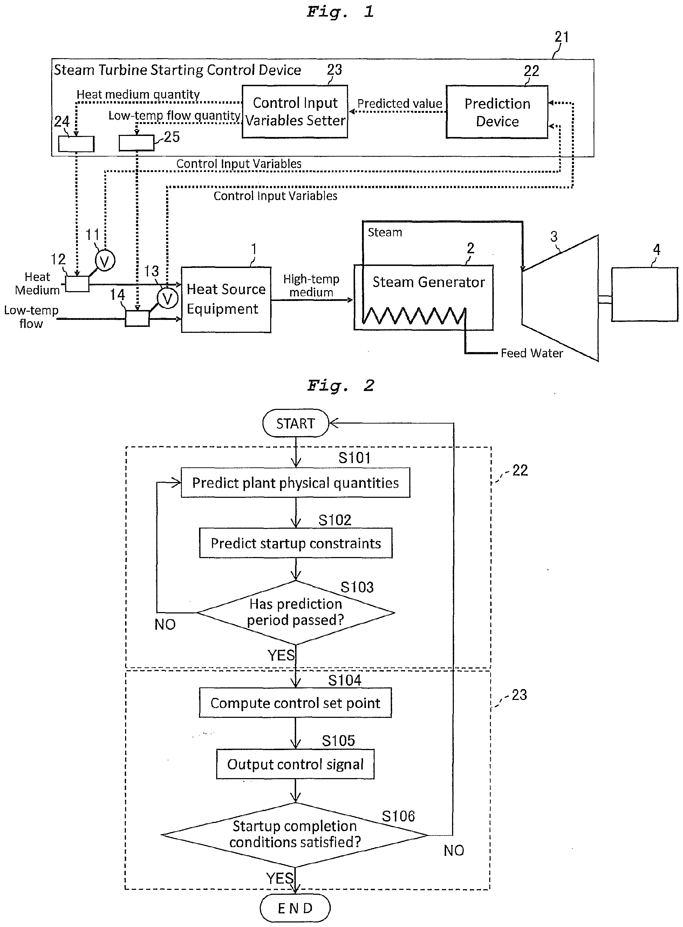

Fig. 1 is a schematic block diagram of a steam turbine power plant according to a first embodiment of the present invention.

The steam turbine power plant shown in Fig. 1 includes heat source equipment 1, a steam generator 2, a steam turbine 3, an electric generator 4, a heat medium flow controller 12, a low-temperature fluid flow controller 14, and a steam turbine starting control device 21. An example in which the heat source equipment 1 in the present embodiment is a gas turbine, that is, the steam turbine power plant is of a combined-cycle type, is described below.

The heat source equipment 1 uses the amount of heat possessed by a heat medium (in the present example, a gas fuel, a liquid fuel, a hydrogen-containing fuel, or the like), to heat a low-temperature flow (in the example, a flow of air burned with the fuel) and supply this heated flow as a high-temperature flow of fluid (in the example, a combustion gas that has been used to drive the gas turbine) to the steam generator 2. The steam generator 2 (in the present example, a waste heat recovery boiler) heats feed water by heat exchange with the heat held by the high-temperature fluid flow which has been generated by the heat source equipment 1, and thereby generates steam. The steam thus generated by the steam generator 2 is next used to drive the steam turbine 3. The electric generator 4 is coaxially coupled to the steam turbine 3, and the generator 4 converts rotational driving force of the steam turbine 3 into electric power. The electric power that the generator 4 has generated is output to, for example, an electric power system (not shown).

The heat medium flow controller 12 (in the present example, a fuel control valve) is provided on a heat medium supply route leading to the heat source equipment 1, and the heat medium flow controller 12 controls a flow rate of the heat medium supplied to the heat source equipment 1. The low-temperature fluid flow controller 14 (in the present example, IGV) is provided on a low-temperature fluid supply route leading to the heat source equipment 1, and the low-temperature fluid flow controller 14 controls a flow rate of the low-temperature fluid supplied to the heat source equipment 1. The controllers 12, 14 are each fitted with a control input variables measuring instrument 11 or 13, by which is measured a control input variable (in the present example, a valve opening angle) of the controller 12, 14. The control input variable of the controller 12, 14 that the control input variables measuring instrument 11, 13 has measured is input to the steam turbine starting control device 21.

### 2. Steam turbine starting control device

The steam turbine starting control device 21 includes a prediction device 22, a control input variables setter 23, and control signal output devices 24, 25. These elements are described in order below.

### (1) Prediction device

During the startup of the steam turbine 3, the prediction device 22 predicts, from the control input variable of the controller 12, 14, future values of the startup constraints estimated to be imposed upon the steam turbine 3 when a preset time period elapses from the current time of day, and outputs the predicted values to the control input variables setter 23 (in the present example, a gas turbine controller). The preset time period here refers to a prediction period (described later herein) or a period that has been set to be longer than the prediction period. The startup constraints refer to those changes in physical quantities due to abrupt increases in steam temperature, steam pressure, or the like, that will appear when the steam turbine 3 is started. The physical quantities are a magnitude of a thermal stress applied to a turbine rotor of the steam turbine 3, that of axial differential thermal expansion in the turbine rotor and a casing accommodating the turbine rotor, and other variables developing during the start of the turbine. Hereinafter, when the wording "thermal stress" is used, this simply means the thermal stress upon the turbine rotor, and when the wording "differential thermal expansion" is used, this simply means the axial differential thermal expansion of the turbine rotor and the casing.

The startup constraints computed by the prediction device 22 include at least one of the thermal stress and differential thermal expansion of the steam turbine 3 that appear during the prediction period. The prediction of the thermal stress, in particular, is described below by way of example in the present embodiment. In addition, the prediction period is a time that includes a response time from a start of controlling the controller 12, 14 and imparting a change to the amount of heat that the heat source equipment 1 generates, until the steam turbine 3 has suffered a change in startup constraint. That is to say, the prediction period is the response time or a time that has been set to be longer than the response time. The prediction period differs according to the kind of startup constraint. For example, a time required for a thermal stress to start changing for a reason such as a delay in heat transfer is shorter than a time required for differential thermal expansion to start developing for a reason such as the delay in heat transfer.

Startup constraints can be calculated in accordance with the known rules of thermodynamics and/or the rules of heat transfer engineering. Thermal-stress calculation sequences that the prediction device 22 executes are set forth below by way of example.

### · Sequence A1

The control input variable of the controller 12, 14 corresponds to the supply rates of the heat medium and low-temperature fluid to the heat source equipment 1 and is therefore closely related to a thermal load state of the heat source equipment 1. Accordingly, first a process in which heat and matter propagate from the heat source equipment 1 through the steam generator 2 to the steam turbine 3 is calculated from the control input variable of the controller 12, 14 that the control input variables measuring instrument 11, 13 has measured. Next, a flow rate, pressure, temperature, and other plant physical quantities of the steam that are estimated to be reached at an entrance of the steam turbine 3 after the preset time period has elapsed are further calculated from a result of that calculation. Predictive computation of the plant physical quantities can be conducted by first assuming that current change rates of the heat medium flow rate and the low-temperature fluid flow rate (i.e., change rates of the control input variable of the controller 12, 14) remain invariant from the current time to the preset time period, then calculating, from the value measured by the control input variables measuring instrument 11, 13, a value that the control input variable of the controller 12, 14 is estimated to take after the elapse of the preset time period, and computing the plant physical quantities from the calculated value of the control input variable in the manner described above.

### · Sequence A2

Next on the basis of the calculation results in sequence A1, pressures, temperatures, heat transfer coefficient, and other variables at various stages of the steam turbine 3 are calculated allowing for a pressure drop at a first stage of the steam turbine 3.

### · Sequence A3

Heat transfer of the steam to the turbine rotor is calculated from the calculation results in sequence A2, and after that, a temperature distribution in a radial direction of the turbine rotor is calculated from a result of that calculation.

### · Sequence A4

Finally, a thermal stress estimated to occur after the elapse of the preset time period is calculated from the calculation result in sequence A3, pursuant to the rules of materials engineering that use a coefficient of linear expansion, Young's modulus, Poisson ratio, and/or the like.

The prediction device 22 executes the above sequences to compute startup constraints at a predetermined sampling cycle, then store the computed startup constraints, and output prediction time periods of time-series data to the control input variables setter 23 for each prediction time period.

### (2) Control input variables setter

The control input variables setter 23 calculates control input variables of the controller 12, 14 so that the data predictions that have been input from the prediction device 22 fall within a range of the limit values which have been set beforehand in the process of starting the steam turbine 3. These control input variables are calculated from deviations between the limit values and a predicted value (e.g., a peak value) of the startup constraints time-series data that has been input from the prediction device 22, and the calculations are conducted so that, for example, the predicted value does not overstep or approach the limit values. The control input variables to reach the heat medium flow controller 12 are output to the control signal output device 24 in advance, and the control input variables to reach the low-temperature fluid flow controller 14 are output to the control signal output device 25 in advance.

### (3) Control signal output devices

The control signal output device 24 computes a command value addressed to the heat medium flow controller 12, from the control input variables that the control input variables setter 23 has calculated, and outputs the computed command value to the heat medium controller 12. The command value to the heat medium controller 12 is determined by numerically represented device characteristics. In the present embodiment, the command value is calculated from a fuel flow rate that satisfies a gas turbine load command (MWD), for example. After the command value has been output, the heat medium controller 12 executes PID control so that the control input variable measured by the control input variables measuring instrument 11 will be controlled to approach a target value (set point) of the control input variable.

The control signal output device 25 computes a command value addressed to the low-temperature fluid flow controller 14, from the control input variables that the control input variables setter 23 calculated, and outputs the computed command value to the low-temperature fluid flow controller 14. The command value to the low-temperature fluid flow controller 14 is also determined by the numerically represented device characteristics. In the present embodiment, the command value is calculated from an air flow rate that satisfies a gas turbine speed command, for example. After the command value has been output, the low-temperature fluid flow controller 14 executes PID control so that the control input variable measured by the control input variables measuring instrument 13 will be controlled to approach a target value (set point) of the control input variable.

### 3. Starting control sequence

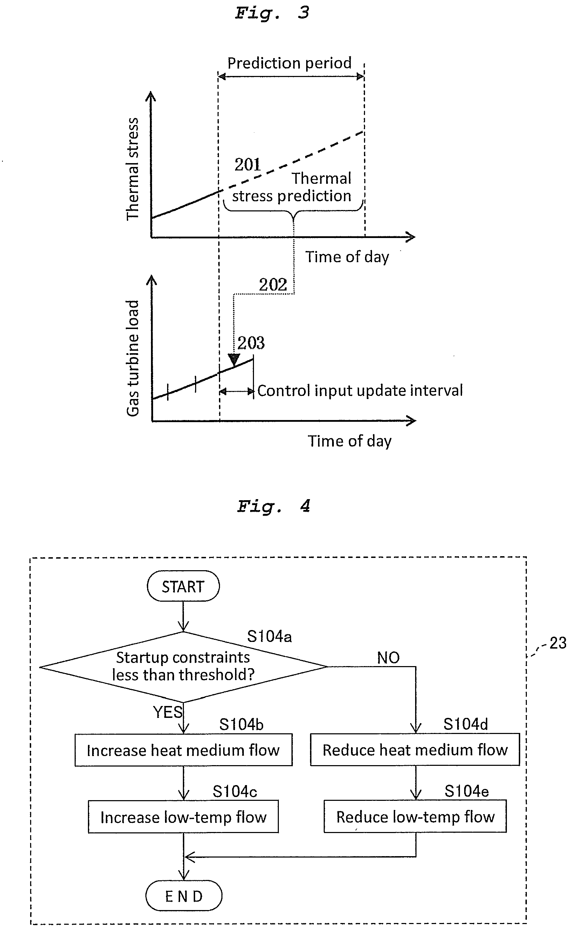

Fig. 2 is a flowchart representing a starting control sequence that the steam turbine starting control device 21 conducts for the steam turbine 3, and Fig. 3 is a supplemental explanatory diagram of the starting control sequence.

### · Steps S101 to S103

Steps S101 to S103, shown in Fig. 2, constitute a startup constraints prediction data-sampling sequence that the prediction device 22 executes. That is to say, the steam turbine starting control device 21 starts the data-sampling sequence to start the steam turbine 3, and after this, the controller 21 activates the prediction device 22 to compute the plant physical quantities that the plant is estimated to have after the elapse of the preset time period (step S101), and then compute startup constraints from the computed plant physical quantities (step S102). The plant physical quantities computation sequence and the startup constraints computation sequence are as described above. In addition, since the present embodiment assumes that as described above, the control input variable of the controller 12, 14 changes at a current rate of change within the preset time period to ensure a lighter processing load, the startup constraints are calculated assuming such linear changes in startup constraint (in the present example, thermal stress) 201 that are shown in Fig. 3.

After the calculation of the startup constraints, the prediction device 22 determines whether the prediction period has passed from the start of the steam turbine (step S103), and next until the prediction period has passed, repeats steps S101-S103 to sample computed startup constraint values at fixed cycles (processing cycles of steps S101-S103). After the sampling of the computed startup constraint values corresponding to the prediction period, the steam turbine starting control device 21 shifts sequence control to steps S104 to S107.

### · Steps S104 to S107

Steps S104 to S107 constitute a sequence that the control input variables setter 23 executes, and this sequence is a control sequence executed for the controller 12, 14.

In step S104, the control input variables of the controllers 12, 14 are computed from the prediction period of predicted startup constraints time-series data that was obtained in the sampling sequence of steps S101-S103. In step S105, command values are output to the controllers 12, 14 via the control signal output devices 24, 25 and the corresponding control input variables of the controllers 12, 14 are corrected. In the present embodiment, as indicated by an arrow 202 in Fig. 3, a time 203 at which the command values are output to the controllers 12, 14 in step S105 is short relative to the prediction period, only occupying an initial certain time of the prediction period (this certain time is hereinafter referred to as the control input update interval). A plurality of programs to execute here the sequence shown in Fig. 2 are active at cycles of the control input update interval, with time differences. Accordingly the command values are newly imparted to the controllers 12, 14 at the cycles of the control input update interval by the programs active with the time differences. Thus the command values based on the predicted startup constraints data corresponding to the prediction period longer than a response time of the startup constraints are imparted to the controllers 12, 14 at a cycle shorter than the prediction period. If the number of programs which execute the sequence of Fig. 2 with the time differences is taken as A, the prediction period equals a value obtained by multiplying the control input update interval by A, so this enables overlapped output of the same command value to be avoided while ensuring continuity of the output of the command values.

After the output of the command signals to the controllers 12, 14, whether startup completion conditions are satisfied is determined in step S106. If the conditions are satisfied, the sequence in Fig. 2 is completed, and if the conditions are not satisfied, sequence control is returned to a very beginning (START) of the starting control sequence, as shown in Fig. 2. The startup completion conditions here are conditions that become a basis for determining whether the steam turbine power plant has shifted to rated operation (e.g., whether the fuel flow rate, the turbine output, the generator output, and the like have reached respective ratings), and these conditions are defined on a plant-specific basis. This means that up until the startup completion conditions have been satisfied, that is, during the starting control sequence, the steam turbine starting control device 21 will execute the sequence of Fig. 2 at the cycle of the prediction period.

Look-ahead control of the physical quantities of the steam generated by the steam generator 2 will be conducted by repeated execution of the above sequence.

### 4. Control input variables computation sequence

Fig. 4 is a flowchart that shows details of step S104 in the sequence of Fig. 2.

In the flowchart of Fig. 4, whether the startup constraints are less than respective threshold values (set points) is determined first (step S104a). Each of the threshold values differs according to the kind of startup constraint, and is a value that has been set to be smaller than a corresponding limit value, for example, a value of 90% of the limit value. If the startup constraints are less than the threshold values, the control input variables of the controllers 12, 14 are set to increase the flow rates of the heat medium and the low-temperature fluid (steps S104b, 104c). If the startup constraints are equal to or greater than the threshold values, the control input variables of the controllers 12, 14 are set to reduce the flow rate of the heat medium (step S104d) and maintain that of the low-temperature fluid (step S104e). Based on differences between, for example, the peak values and limit values (set points for each startup constraint) of the time-series data obtained within the prediction period, control input variables are set so that the startup constraints occurring after the elapse of the preset time period will fall within the ranges of the limit values. After execution of steps S104b, S104c or steps S104d, S104c, step S104 is finished and then control is shifted to step S105. Order of execution of steps S104b, S104c may be reversed. The same also applies to steps S104d, S104e.

### 5. Beneficial effects

The present embodiment yields the following beneficial effects.

### (1) Rapid start of the steam turbine

In accordance with the present embodiment, the amount and temperature of steam generated by the steam generator 2 can be controlled by controlling at least one of the flow rates of the heat medium and low-temperature fluid supplied to the heat source equipment 1, an element provided at a front stage of the steam generator 2. For example, the steam temperature can be mainly controlled by operating the heat source flow controller 12 and controlling the flow rate of the heat medium. This is because the steam temperature changes with a temperature of a high-temperature fluid supplied to the steam generator 2. Additionally, the flow rate of the steam can be mainly controlled by operating the low-temperature fluid flow controller 14 and controlling the flow rate of the low-temperature fluid. This is because controlling the flow rate of the low-temperature fluid controls that of the high-temperature fluid, hence changing the amount of steam generated in the steam generator 2.

Thus, the flow rate and temperature of the steam that are the physical quantities closely associated with the startup constraints such as a thermal stress and differential thermal expansion can both be regulated. This in turn enables the steam flow and the steam temperature to be controlled flexibly according to a particular state of the steam turbine 3, and thus allows the steam turbine 3 to be started rapidly in an appropriate way.

In addition, since the amount of steam generated can itself be increased, a starting time of the steam turbine can be reduced relative to a conventional configuration in which a flow rate of steam which has already been generated in a steam generator is controlled by a control valve and then the flow rate of the steam supplied to a steam turbine is regulated. In the conventional configuration, the flow rate of the steam is limited to a narrow regulating range, so while the flow of the steam might be capable of being throttled down with the control valve, the flow rate of the steam cannot be increased.

### (2) Suppressed energy loss

In the present embodiment, since the amount of steam generated in the steam generator 2 can itself be controlled, the steam temperature and the amount of steam generated can be controlled flexibly in response to operating conditions. This enables energy loss to be suppressed relative to the conventional configuration in which a surplus of the steam which has already been generated is given away via a bypass valve for regulated steam flow.

### (3) Highly efficient and accurate predictive calculation

In a case of a general configuration in which a thermal stress and the like are predicted and a supply rate of steam supplied to a steam turbine is controlled with a control valve, predictive calculation is usually executed in a plurality of patterns for one output operation on a command value for an opening angle of the control valve. This calculation method is intended to raise adequacy of control by adopting predictive calculation results of the patterns as a choice or option. This method, however, applies an extremely significant calculation load due to executing the predictive calculation of the patterns, makes it absolutely necessary to impart a margin to a calculation capacity of a control panel or switchboard so that the predictive calculation follows a change in startup constraint, and/or requires a high level of know-how for construction of an algorithm for increasing a calculation speed.

In a case of the present embodiment, on the other hand, faster predictive calculation can be implemented by limiting a transition assumed of the change rates of the values measured by the control input variables measuring instruments 11, 13, to one pattern, and applying this pattern to the predictive calculation only. As a result, a sampling period at which the predicted values of the plant physical quantities can be enhanced and the control input variables can be correspondingly controlled more frequently. This provides high prediction accuracy, and yet suppresses calculation throughput, so reducing restrictions on a memory, clock frequency, and other factors of a control panel or switchboard. High contribution to application and operation of an easy-to-mount and stable actual machine is anticipated as well. Furthermore, if a time longer than the response time of the startup constraints is set as the prediction period, this improves prediction accuracy of the intended startup constraints.

### Second Embodiment

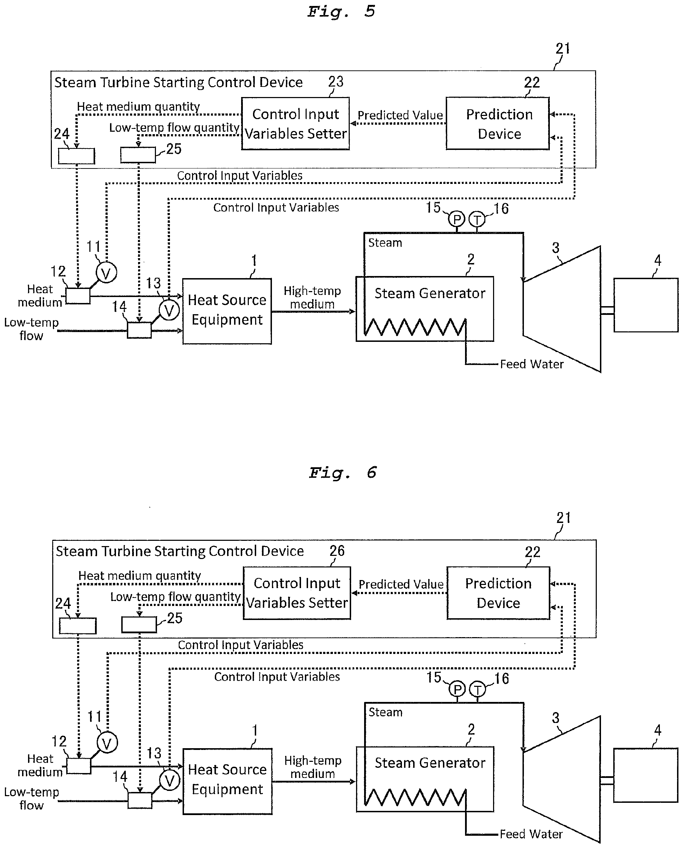

Fig. 5 is a schematic block diagram of a steam turbine power plant according to a second embodiment of the present invention. In the figure, substantially the same elements as in the first embodiment are each assigned the same reference number as on the shown drawings, and description of these elements is omitted herein.

As shown in Fig. 5, the present embodiment differs from the first embodiment in that the former includes a function that corrects the predicted values of the plant physical quantities. To be more specific, the steam turbine power plant shown in the figure includes a pressure gauge 15 and a temperature gauge 16 on a steam line connecting the steam generator 2 and the steam turbine 3. The pressure and temperature of the steam supplied to the steam turbine 3 are measured by the pressure gauge 15 and the temperature gauge 16, respectively, and then input with the values measured by the control input variables measuring instruments 11, 13 to the prediction device 22. The prediction device 22 then uses the measurements by the pressure gauge 15 and the temperature gauge 16 to correct the plant physical quantities that have been predicted from the values measured by the control input variables measuring instruments 11, 13.

During plant operation, for example, a certain correlation is likely to occur between the predicted values and measured values of the steam pressure and the steam temperature. For example, the predicted value may be calculated as a certain level higher or lower than the measured value. Such a correlation is stored as a relational expression or a table in a data storage region of the prediction device 22. When the prediction device 22 conducts a predictive calculation of the plant physical quantities in accordance with sequence A1, the predicted values that have been calculated from the values measured by the control input variables measuring instruments 11, 13 are corrected on the basis of the values measured by the pressure gauge 15 and the temperature gauge 16. The prediction device 22 conducts the correction in accordance with the above correlation. After the correction, the device 22 executes sequences A2-A4 and calculates the predicted values of the startup constraints on the basis of the plant physical quantities obtained after the correction.

All other factors, including the configuration and the control sequences, are substantially the same as in the first embodiment.

The present embodiment yields substantially the same beneficial effects as those of the first embodiment. In addition, enhancing the accuracy of the predicted values of the plant physical quantities by the correction also improves the prediction accuracy of the startup constraints and ensures adequate starting control of the steam turbine 3.

While an example of correcting the predicted values of both the steam temperature and the steam pressure has been described in the present embodiment, the pressure gauge 15 and the temperature gauge 16 may be omitted to correct only one of the two values.

### Third Embodiment

Fig. 6 is a schematic block diagram of a steam turbine power plant according to a third embodiment of the present invention. In the figure, substantially the same elements as in the first and/or second embodiment are each assigned the same reference number as on the shown drawings, and description of these elements is omitted herein.

The present embodiment differs from the first and second embodiments in that operation depends upon an operation mode of the heat source equipment 1. More specifically, a control input variables setter 26 in the present embodiment has a command hold function, that is, when the load (gas turbine load) upon the heat source equipment 1 reaches a preset load value (e.g., a load value predefined during plant operation planning), command values addressed to the controllers 12, 14 are held for a fixed time by the above hold function of the setter 26.

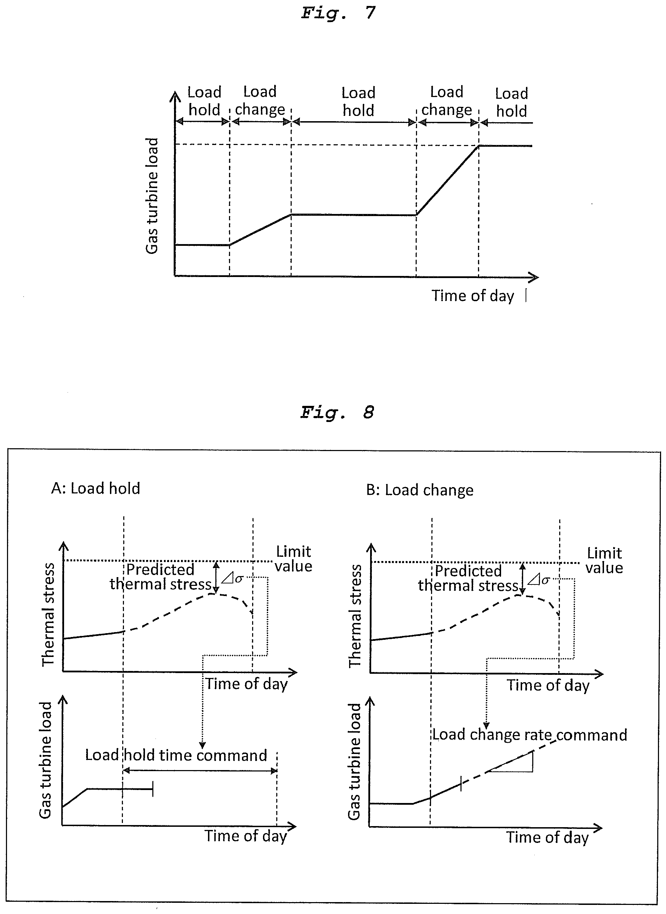

In general, a plurality of specific bands on which the load is to be held are set for the gas turbine and this load often needs to be held for a preset time with each arrival of the load at one of the bands. When a power plant equipped with a gas turbine having such an operational restriction is started, load hold and a load change are repeated as shown in Fig. 7. The present embodiment is geared to such a restriction on a starting control method.

Fig. 8 is an explanatory diagram of a method for controlling the heat source equipment 1 by use of the control input variables setter 26.

During the starting control sequence, the control input variables setter 26 computes the load of the heat source equipment 1. The heat source load 1 can be computed from the heat source flow rate (the value measured by the heat source flow controller 12) and/or the like. The control input variables setter 26 determines at all times whether the load of the heat source equipment 1 has reached any one of various load set points, and if the load of the heat source equipment 1 has reached one of the load set points and needs to be held for operational reasons, the setter 26 sets a load hold time as shown in an example of Fig. 8A. For example, when a difference derived by subtracting a peak value of a predicted thermal stress from a thermal stress limit value is expressed as Δσ, if Δσ in the example of Fig. 8A is a plus value, the load hold time is set to be shorter with greater Δσ, and if Δσ is a minus value, the load hold time is set to be longer with greater Δσ. Additionally, the control input variables setter 26 outputs the current control input variables as target values to the control signal output devices 24, 25 without depending upon the predicted values that are input from the prediction device 22. After that, the setter 26 holds the settings of the target control input variables until the preset time has passed. After the preset time has passed, control is shifted to variable control of the load of the heat source equipment 1. When the operation state of the heat source equipment 1 is a load change, the control input variables setter 26 executes the variable control of the load of the heat source equipment 1 without executing the control input variables hold sequence described above.

When the control input variables setter 26 executes the variable control of the load of the heat source equipment 1, the setter 26 sets a load change rate command value (control input variables) as shown in Fig. 8B, and outputs the command value to the control signal output devices 24, 25. For example, if the value of Δσ is plus, the load change rate is set to be greater according to the particular value of Δσ, and if the value of Δσ is minus, the load change rate is set to be smaller according to the value of Δσ. When the load of the heat source equipment 1 reaches another set point as a result of such variable control, the preset time is held once again and the control of the control input variables is returned to variable control.

Thus, even if the heat source equipment 1 has operational restrictions on the transition of the load, the present embodiment provides substantially the same beneficial effects as those of the first and second embodiments.

### Other Examples

While examples of calculating a thermal stress as a startup constraint with the prediction device 22 have been described in the first to third embodiments, differential thermal expansion or both of a thermal stress and differential thermal expansion may be calculated as a control input variable(s). Examples of calculation sequences relating to the calculation of differential thermal expansion are shown as sequences B1 to B5 below.

### · Sequence B1

The flow rate, pressure, temperature, and other factors of the steam that are estimated to be reached at the entrance of the steam turbine 3 after the preset time period has elapsed are calculated in substantially the same manner as that of thermal stress calculation.

### · Sequence B2

On the basis of calculation results obtained in sequence B1, the pressures, temperatures, heat-transfer coefficients, and other factors of various sections of the turbine rotor and the casing are calculated allowing for pressure drops at the various sections of the turbine rotor and the casing.

### · Sequence B3

Temperatures of various sections of the turbine rotor and casing as cut in an axial direction of the turbine are calculated by heat-transfer calculation based on results of the calculation in sequence B2.

### · Sequence B4

The amounts of axial thermal change (expansion) of the turbine rotor and casing are calculated from results of the calculation in sequence B3.

### · Sequence B5

On the basis of calculation results obtained in sequence B4, differential thermal expansion of the turbine rotor and casing after the elapse of the preset time period is calculated in accordance with, for example, the rules of materials engineering that uses a coefficient of linear expansion.

In addition, while a combined-cycle power plant has been taken by way of example, the present invention can be applied to substantially all types of power plants including steam turbines, represented by steam power plants and solar thermal power plants. Sequences to be used to start these power plants are also substantially the same as in the embodiments.

For example, when the present invention is applied to a steam power plant, coal or natural gas is equivalent to the heat source, air or oxygen to the low-temperature fluid, a fuel control valve to the controller 12, 14, a boiler furnace to the heat source equipment 1, a combustion gas to the high-temperature fluid, a boiler heat transfer section (steam-generating section) to the steam generator 2, and a boiler load controller to the control input variables setter 2.

For example, when the present invention is applied to a solar thermal power plant, solar light is equivalent to the heat source, a heat-collecting panel drive to the heat medium flow controller 12, a heat-collecting panel to the heat source equipment 1, a heat-collecting panel direction/angle measuring instrument to the control input variables measuring instrument 11, an oil, a high-temperature solvent salt, or any other appropriate solar-energy conversion and hold medium to the low-temperature fluid and the high-temperature fluid, an oil flow control valve to the low-temperature fluid flow controller 14, and a control input variables setter to the control input variables setter 23.

Alternatively, the steam pressure, steam temperature, and fuel flow rate that are entered in a predictive calculation method 32 may only be replaced by steam pressure or steam temperature and a predictive calculation of a thermal stress may be conducted.

Furthermore, the plant physical quantities may include a temperature, pressure, flow rate of exit steam as well as those of entrance steam, the steam flowing into the steam turbine 3. Increasing the number of kinds of information about the plant physical quantities allows startup constraint prediction accuracy to be improved. Besides, while the values measured by the control input variables measuring instruments 11, 13 have been adopted as the control input variables of the controllers 12, 14 that are to be used for the predictive calculation of the startup constraints, those measured values may instead be replaced by the command values that are output to the controllers 12, 14.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A steam turbine power plant, comprising:
heat source equipment (1) that heats a low-temperature flow by applying a heat medium to generate a high-temperature flow;
a steam generator (2) that generates steam using the high-temperature flow generated by the heat source equipment (1) ;
a steam turbine (3) driven by the steam generated by the steam generator (2);
an electric generator (4) that converts rotational motive power of the steam turbine (3) into electric power;
a heat medium controller (12) that controls a supply rate of the heat medium supplied to the heat source equipment (1);
a low-temperature flow controller (14) that controls a supply rate of the low-temperature flow supplied to the heat source equipment (1),
**characterized by** comprising
a prediction device (22) that predicts startup constraints during a previously set prediction time period after a set time from the current time of the steam turbine (3) from control input variables of the heat medium controller (12) and the low-temperature flow controller (14) when the steam turbine (3) is started;
a control input variables setter (23) that sets the control input variables of the heat medium controller (12) and the low-temperature flow controller (14) from limit values of the startup constraints as well as from a value predicted by the prediction device; and
a control signal output device (24, 25) that outputs command values to the heat medium controller (12) and the low-temperature flow controller (14) in response to the control input variables.

2. The steam turbine power plant according to claim 1, wherein the prediction device (22) computes at least one of a thermal stress and differential thermal expansion of the steam turbine (3) that occur during the previously set prediction time period, as a predicted value of the startup constraints.

3. The steam turbine power plant according to claim 2, wherein the prediction time period is set to be long with respect to a response time that starts from a start of controlling the heat source equipment to having suffered a change of the startup constraints.

4. The steam turbine power plant according to claim 1, further comprising:
a measuring instrument that measures at least one of a pressure and temperature of the steam supplied to the steam turbine;
wherein correction of a predicted value of the startup constraints is based upon a value measured by the measuring instrument.

5. The steam turbine power plant according to claim 1, wherein:
the heat source equipment (1) is a gas turbine, the heat medium is a fuel, and the low-temperature flow is a flow of air.

6. The steam turbine power plant according to claim 5, wherein:
when a load value of the gas turbine equals a previously set point, the control input variables setter holds for a previously set time the command values that are output to the heat medium controller (12) and the low-temperature flow controller (14).

## Patentansprüche

1. Dampfturbinenkraftwerk, das Folgendes umfasst:
eine Wärmequelleneinrichtung (1), die durch Anwenden eines Wärmemediums einen Niedertemperaturstrom erwärmt, um einen Hochtemperaturstrom zu erzeugen;
einen Dampfgenerator (2), der unter Verwendung des Hochtemperaturstroms, der durch die Wärmequelleneinrichtung (1) erzeugt wird, Dampf erzeugt;
eine Dampfturbine (3), die durch den Dampf angetrieben wird, der durch den Dampfgenerator (2) erzeugt wird;
einen elektrischen Generator (4), der die Rotationsbewegungsleistung der Dampfturbine (3) in elektrische Leistung umsetzt;
eine Wärmemediumsteuereinheit (12), die eine Zuführgeschwindigkeit des Wärmemediums steuert, das der Wärmequelleneinrichtung (1) zugeführt wird;
eine Niedertemperaturstromsteuereinheit (14), die eine Zuführgeschwindigkeit des Niedertemperaturstroms steuert, der der Wärmequelleneinrichtung (1) zugeführt wird,
**gekennzeichnet durch**
eine Vorhersagevorrichtung (22), die während einer zuvor eingestellten Vorhersagezeitdauer auf eine eingestellte Zeit von der aktuellen Zeit der Dampfturbine (3) folgend Hochlaufbeschränkungen von Steuereingangsvariablen der Wärmemediumsteuereinheit (12) und der Niedertemperaturstromsteuereinheit (14) vorhersagt, wenn die Dampfturbine (3) gestartet wird;
eine Einheit (23) zum Einstellen der Steuereingangsvariablen, die die Steuereingangsvariablen der Wärmemediumsteuereinheit (12) und der Niedertemperaturstromsteuereinheit (14) sowohl aus den Grenzwerten der Hochlaufbeschränkungen als auch aus einem Wert, der **durch** die Vorhersagevorrichtung vorhergesagt wird, einstellt; und
eine Steuersignalausgabevorrichtung (24, 25), die als Antwort auf die Steuereingangsvariablen Anweisungswerte an die Wärmemediumsteuereinheit (12) und an die Niedertemperaturstromsteuereinheit (14) ausgibt.

2. Dampfturbinenkraftwerk nach Anspruch 1, wobei die Vorhersagevorrichtung (22) eine thermische Belastung und/oder eine differentiale thermische Ausdehnung der Dampfturbine (3), die während der zuvor eingestellten Vorhersagezeitdauer auftreten, als einen Vorhersagewert der Hochlaufbeschränkungen berechnet.

3. Dampfturbinenkraftwerk nach Anspruch 2, wobei die Vorhersagezeitdauer derart eingestellt ist, dass sie in Bezug auf eine Antwortzeit, die bei einem Beginn des Steuerns der Wärmequelleneinrichtung beginnt, lang ist, damit eine Änderung der Hochlaufbeschränkungen erfahren wird.

4. Dampfturbinenkraftwerk nach Anspruch 1, das ferner Folgendes umfasst:
ein Messinstrument, das einen Druck und/oder eine Temperatur des Dampfs misst, der der Dampfturbine zugeführt wird;
wobei die Korrektur eines vorhergesagten Wertes der Hochlaufbeschränkungen auf einem Wert basiert, der durch das Messinstrument gemessen wird.

5. Dampfturbinenkraftwerk nach Anspruch 1, wobei:
die Wärmequelleneinrichtung (1) eine Gasturbine ist, das Wärmemedium ein Brennstoff ist und der Niedertemperaturstrom ein Luftstrom ist.

6. Dampfturbinenkraftwerk nach Anspruch 5, wobei:
dann, wenn ein Lastwert der Gasturbine gleich einem zuvor eingestellten Einstellungspunkt ist, die Einheit zum Einstellen der Steuereingangsvariablen die Anweisungswerte, die an die Wärmemediumsteuereinheit (12) und an die Niedertemperaturstromsteuereinheit (14) ausgegeben werden, für eine zuvor eingestellte Zeit hält.

## Revendications

1. Centrale électrique à turbine à vapeur, comprenant :
un équipement formant source de chaleur (1) qui chauffe un flux à basse température en appliquant un milieu calorifique pour générer un flux à haute température ;
un générateur de vapeur (2) qui génère de la vapeur en utilisant le flux à haute température généré par l'équipement formant source de chaleur (1) ;
une turbine à vapeur (3) entraînée par la vapeur générée par le générateur de vapeur (2) ;
un générateur électrique (4) qui convertit une puissance motrice rotative de la turbine à vapeur (3) en une puissance électrique ;
un contrôleur de milieu calorifique (12) qui commande un débit d'alimentation du milieu calorifique alimenté à l'équipement formant source de chaleur (1) ;
un contrôleur de flux à basse température (14) qui commande un débit d'alimentation du flux à basse température alimenté à l'équipement formant source de chaleur (1),
**caractérisée en ce qu'**elle comprend
un dispositif de prédiction (22) qui prédit des contraintes de démarrage pendant une période temporelle de prédiction précédemment fixée après un temps fixé depuis le temps actuel de la turbine à vapeur (3) à partir de variables d'entrée de commande du contrôleur de milieu calorifique (12) et du contrôleur de flux à basse température (14) quand la turbine à vapeur (3) est démarrée ;
un moyen de fixation de variables d'entrée de commande (23) qui fixe les variables d'entrée de commande du contrôleur de milieu calorifique (12) et du contrôleur de flux à basse température (14) à partir de valeurs limite des contraintes de démarrage ainsi qu'à partir d'une valeur prédite par le dispositif de prédiction ; et
un dispositif de sortie de signal de commande (24, 25) qui délivre des valeurs de commande au contrôleur de milieu calorifique (12) et au contrôleur de flux à basse température (14) en réponse aux variables d'entrée de commande.

2. Centrale électrique à turbine à vapeur selon la revendication 1, dans laquelle le dispositif de prédiction (22) calcule au moins un paramètre parmi une contrainte thermique et une expansion thermique différentielle de la turbine à vapeur (3) qui se produisent pendant la période temporelle de prédiction précédemment fixée, à titre de valeur prédite des contraintes de démarrage.

3. Centrale électrique à turbine à vapeur selon la revendication 2, dans laquelle la période temporelle de prédiction est fixée pour être longue par rapport à un temps de réponse qui démarre depuis un démarrage de la commande de l'équipement formant source de chaleur pour avoir souffert d'un changement des contraintes de démarrage.

4. Centrale électrique à turbine à vapeur selon la revendication 1, comprenant en outre :
un instrument de mesure qui mesure au moins un paramètre parmi une pression et une température de la vapeur alimentée à la turbine à vapeur ;
dans laquelle la correction d'une valeur prédite des contraintes de démarrage est basée sur une valeur mesurée par l'instrument de mesure.

5. Centrale électrique à turbine à vapeur selon la revendication 1, dans laquelle :
l'équipement formant source de chaleur (1) est une turbine à gaz, le milieu calorifique est un combustible, et le flux à basse température est un flux d'air.

6. Centrale électrique à turbine à vapeur selon la revendication 5, dans laquelle :
quand une valeur de charge de la turbine à gaz est égale à un point précédemment fixé, l'organe de fixation des variables d'entrée de commande retient pendant un temps précédemment fixé les valeurs de commande délivrées au contrôleur de milieu calorifique (12) et au contrôleur de flux à basse température (14).
